(19) Europäisches Patentamt
European Patent Office
Office européen des brevets

(11) **EP 0 767 478 B1**

(12) **EUROPÄISCHE PATENTSCHRIFT**

(45) Veröffentlichungstag und Bekanntmachung des Hinweises auf die Patenterteilung:
06.10.1999 Patentblatt 1999/40

(51) Int Cl.⁶: **H01H 47/00**, F16P 3/20

(21) Anmeldenummer: 95117767.4

(22) Anmeldetag: 11.11.1995

(54) **Sicherheitsschaltung**

Safety circuit

Circuit de sécurité

(84) Benannte Vertragsstaaten:
**AT BE CH DE DK ES FR GB GR IE IT LI LU MC NL PT SE**

(30) Priorität: 04.10.1995 DE 95115622

(43) Veröffentlichungstag der Anmeldung:
09.04.1997 Patentblatt 1997/15

(73) Patentinhaber: **SCHNEIDER ELECTRIC GMBH
40880 Ratingen (DE)**

(72) Erfinder:
• **Schlicker, Michael
D-51580 Reichshof-Denklingen (DE)**

• **Schmitz, Frank
D-51427 Bergisch-Gladbach (DE)**

(74) Vertreter:
**Wanischeck-Bergmann, Axel, Dipl.-Ing.
Rondorfer Strasse 5a
50968 Köln (DE)**

(56) Entgegenhaltungen:
**EP-A- 0 105 054     DE-A- 1 926 607
DE-A- 3 600 173**

**Beschreibung**

Die Erfindung betrifft eine Sicherheitsschaltung mit einer Betätigungsvorrichtung für elektrische Einrichtungen, wobei die Betätigungsvorrichtung mittels zweier Taster bzw. Kontaktsätzen bedienbar ist. Unter dem Begriff elektrische Einrichtungen sind vielseitige Anwendungsgebiete zu verstehen, d. h., die Erfindung läßt sich auf alle elektrische Sicherheitseinrichtungen mit zwei getrennt zu überwachenden elektrischen Tastern bzw. Kontaktsätzen, wie bei Lichtgittern, Schutztüren, zum Beispiel an Maschinenanlagen, Not-Aus-Überwachungen, Grenzschaltüberwachungen, Fußmatten, Lichtvorhängen und dergleichen anwenden. Als Beispiele für Maschinenanlagen seien Pressen, Stanzvorrichtungen, Fräsmaschinen, Drehbänke oder Aufzüge genannt.

Aus der Praxis und aus dem Stand der Technik sind Sicherheitsschaltungen der zuvor genannten Gattung in mehreren Ausführungen bekannt, und zwar im Zusammenhang mit elektrischen Einrichtungen oder Maschinen, bei denen im eingeschalteten Zustand für die Bedienungspersonen gefährliche Bedingungen, insbesondere gefährliche Maschinenbewegungen herrschen. Zum Einschalten des jeweils gefährlichen Zustandes dient hierbei eine Zweihandbetätigung, wodurch sichergestellt werden soll, daß die beiden Hände der bedienenden Person beschäftigt sind und jede Möglichkeit ausgeschlossen ist, etwa mit der einen oder anderen Hand in den Gefahr bringenden Raum einzugreifen. Gleichzeitig soll sichergestellt sein, daß sich die bedienende Person oder deren Beine an einem Platz befinden, an dem keine Gefahr während der gefährlichen Bewegung auf die bedienende Person entsteht. In diesem Zusammenhang soll auch bei den bekannten Sicherheitsschaltungen angestrebt werden, daß jegliche Manipulation an der Zweihandbetätigung ausgeschlossen ist. Ferner wird angestrebt, daß die elektrische Sicherheitsschaltung fehlerfrei arbeitet, so daß nur dann ein Durchschalten an den Verbraucher, d. h. ein Einschalten des gefährlichen Betriebszustandes möglich ist, daß aber andererseits bei Auftreten irgendeines Fehlers innerhalb der Schaltung mit Sicherheit ein Durchschalten unterbunden wird. Die bisher bekannten elektrischen Sicherheitsschaltungen erfüllen entweder nicht alle Sicherheitskriterien oder sie sind derart kompliziert und bauaufwendig gestaltet, daß sie einen sehr hohen Kostenaufwand erfordern und auch gerade in der Kompliziertheit des Aufbaus ein Sicherheitsrisiko zu sehen ist.

Der Erfindung liegt die Aufgabe zugrunde, eine allgemein geeignete Sicherheitsschaltung zu schaffen, die sehr einfach und übersichtlich gestaltet ist und die einen demzufolge geringen Kostenaufwand bedeutet, die aber allen Sicherheitskriterien standhält einschließlich der Vermeidung von irgendwelchen Manipulationen.

Zur Lösung dieser Aufgabe wird eine Sicherheitsschaltung mit den Merkmalen des Anspruches 1 vorgeschlagen.

Demzufolge besteht die Sicherheitsschaltung im wesentlichen aus zwei Baugruppen, nämlich einer Treiberstufe und einer astabilen Kippstufe bzw. einem Multivibrator mit den im Anspruch 1 angeführten Merkmalen.

Eine vorteilhafte Ausgestaltung der Erfindung besteht darin, daß ein Kondensator vorgesehen ist, welcher so bemessen ist, daß er in Ruhelage die Energie speichert, die benötigt wird, um in der Betätigungszeit beider Taster von maximal 500 ms die Kippstufe bzw. den Multivibrator mit Energie zu versorgen.

In diesem Zusammenhang ist es von Vorteil, daß bei Betätigung der beiden Taster innerhalb einer Betätigungszeit von maximal 500 ms die Treiberstufe über die Schließerkontakte der Taster mit Spannung V+ und V- versorgt ist und die Relais aktiviert werden. Schaltungsmäßig ist der Kondensator in die Kippstufe bzw. den Multivibrator integriert.

Vorzugsweise erzeugt die astabile Kippstufe bzw. der Multivibrator Rechtecksignale mit einer Flankensteilheit bis zu 10 μs, vorzugsweise kleiner als 1 μs, wobei insbesondere ein Tastverhältnis $T_{ein}$ zu $T_{aus}$ von 50% zu 50% besteht.

Nach einem weiteren Merkmal der Erfindung ist vorgesehen, daß zwischen dem ersten Taster und der Treiberstufe eine erste Diode und zwischen dem zweiten Taster und der Treiberstufe eine zweite Diode angeordnet sind, wobei die Dioden bei unbetätigten Tastern den Stromfluß zur Treiberstufe sperren.

Ferner ist es bei einer vorteilhaften Weiterbildung der erfindungsgemäßen Sicherheitsschaltung vorgesehen, daß die Rechtecksignale der Kippstufe bzw. des Multivibrators die Treiberstufe in der Art ansteuern, daß die Rechtecksignale alternierend hoch oder niedrig sind, so daß entweder das erste oder das zweite Relais erregt ist.

Nach einem weiteren Merkmal der Erfindung ist vorgesehen, daß die Kippstufe bzw. der Multivibrator über Schließer der Relais versorgt sind, wenn die Relais angezogen sind.

Schließlich ist es bei der erfindungsgemäßen Sicherheitsschaltung vorgesehen, daß die zwei komplementären Rechtecksignale gleiche Längen andauernd und zueinander invers sind.

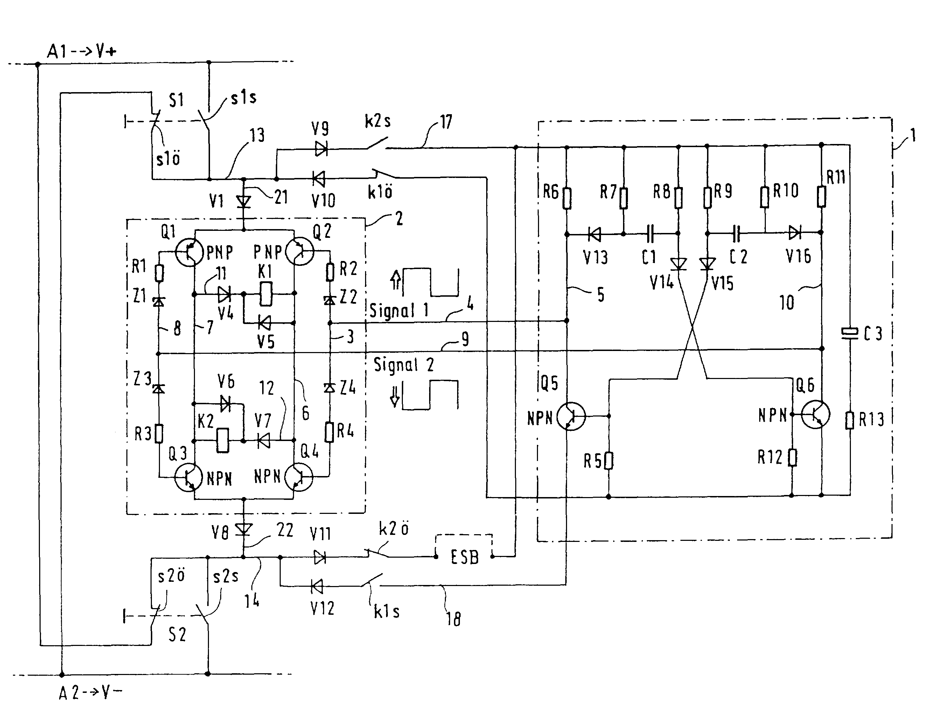

In der Zeichnung ist eine bevorzugte Ausführungsform der erfindungsgemäßen Sicherheitsschaltung dargestellt, die nachfolgend in ihrem Aufbau und in ihrer Funktion beschrieben ist.

Die in der Zeichnung dargestellte Sicherheitsschaltung besteht im wesentlichen aus einer Treiberstufe 2 gemäß der rechteckigen strichpunktierten Linie und einer Kippstufe bzw. einem Multivibrator 1, der ebenfalls in der Zeichnung von einer rechteckigen strichpunktierten Linie umschlossen ist und an die Treiberstufe 2, wie nachfolgend noch ausführlich dargelegt wird, angeschlossen ist.

Die Treiberstufe 2 wirkt mit zwei Tastern S1 und S2 einer im einzelnen nicht dargestellten Betätigungsvorrichtung, beispielsweise einer Zweihandbetätigung zusammen. Die Taster S1 und S2 sind möglichst gleichzeitig, zumindest innerhalb der weiter unten näher erläuterten kurzen Betätigungszeit, zu bedienen. Über die Taster S1 und S2 wird der Treiberstufe 2 die elektrische Spannung V+ sowie V- zugeführt. Die Treiberstufe 2 weist zwei PNP-Transistoren Q1 und Q2 und zwei NPN-Transistoren Q3 und Q4 auf. Die Basen des PNP-Transistors Q2 und des NPN-Transistors Q4 sind über eine Leitung 3 miteinander verbunden, wobei in dieser Leitung 3 zwei Widerstände R2 und R4 und zwei Zenerdioden Z2 und Z4 in Reihe geschaltet sind. Ferner ist zwischen den Zenerdioden Z2 und Z4, die gleichsinnig geschaltet sind, und zwar in ihrer Durchlaßrichtung vom Widerstand R4 zum Widerstand R2, eine Leitung 4 angeschlossen, die die Treiberstufe 2 mit der Kippstufe bzw. dem Multivibrator 1 verbindet und daß weiter unten näher erläuterte Signal 1 überträgt, wobei die Leitung 4 im Multivibrator an einer Leitung 5 angeschlossen ist, die den Widerstand R6 mit dem Kollektor des Transistors Q5 verbindet.

Ferner ist der Kollektor des PNP-Transistors Q2 über eine Leitung 6 mit dem Kollektor des NPN-Transistors Q4 verbunden. Der Emitter des NPN-Transistors Q4 ist wiederum mit dem Emitter des NPN-Transistors Q3 verbunden, dessen Kollektor über eine Leitung 7 mit dem Kollektor des PNP-Transistors Q1 verbunden ist. Der Emitter des PNP-Transistors Q1 ist ferner mit dem Emitter des PNP-Transistors Q2 verbunden. Der PNP-Transistor Q1 und der NPN-Transistor Q3 sind darüberhinaus über eine Leitung 8 verbunden, die jeweils an den Basen der voranstehend genannten Transistoren Q1 und Q3 angeschlossen ist. In der Leitung 8 sind zwei Widerstände R1 und R3 angeordnet, zwischen denen Zenerdioden Z1 und Z3 geschaltet sind. Zwischen den Zenerdioden Z1 und Z3 ist eine Leitung 9 angeschlossen, welche die Leitung 8 in der Treiberstufe 2 mit einer Leitung 10 in der Kippstufe bzw. in dem Multivibrator 1 verbindet, wobei die Leitung 10 zwischen dem Widerstand R11 und dem Kollektor des NPN-Transistors Q6 verläuft. Über die Leitung 9 wird das nachfolgend noch erläuterte Signal 2 übertragen.

Zwischen die Leitungen 6 und 7 sind zwei Relais-Dioden-Kombinationen geschaltet, wobei in einer Leitung 11 eine Diode V4 und ein Relais K1 geschaltet ist, wobei die Durchlaßrichtung dieser Diode von dem Kollektor des PNP-Transistors Q1 in Richtung auf den Kollektor des NPN-Transistors Q4 verläuft. Parallel zum Relais K1 ist eine Freilaufdiode V5 geschaltet, deren Durchlaßrichtung entgegengesetzt der Durchlaßrichtung der Diode V4 ist.

Die zweite Relais-Dioden-Kombination besteht aus einer Leitung 12, in welcher eine Diode V7 und ein Relais K2 in Reihe geschaltet sind, wobei die Diode V7 kollektorseitig des PNP-Transistors Q2 und das Relais K2 kollektorseitig des NPN-Transistors Q3 angeordnet ist und die Durchlaßrichtung der Diode V7 vom Kollektor des PNP-Transistors Q2 zum Kollektor des NPN-Transistors Q3 verläuft. Parallel zum Relais K2 ist ferner eine Freilaufdiode V6 geschaltet, deren Durchlaßrichtung entgegengesetzt der Durchlaßrichtung der Diode V7 verläuft.

Der Taster S1, welcher in diesem Beispiel mit einem Doppelkontakt, nämlich einem Öffnerkontakt s1ö und einem Schließerkontakt s1s ausgestattet ist, ist über eine Leitung 13 mit der Treiberstufe 2 verbunden. In gleicher Weise ist der Taster S2, der ebenfalls mit einem Doppelkontakt, nämlich einem Öffnerkontakt s2ö und einem Schließerkontakt s2s ausgestattet ist, über eine Leitung 14 mit der Treiberstufe 2 verbunden. In die Leitungen 13 und 14, die ebenfalls zu der Kippstufe bzw. dem Multivibrator 1 führen, sind Öffnerkontakte a1ö und k2ö der Relais K1 und K2 angeordnet, wobei dem Öffnerkontakt k1ö eine Diode V10 und dem Öffnerkontakt k2ö eine Diode V11 vorgeschaltet sind, deren Durchlaßrichtung entgegengesetzt ausgerichtet sind. Parallel zu den Leitungen 13 und 14 verlaufen gemäß diesem Ausführungsbeispiel weitere Leitungen 17 und 18, welche ebenfalls den Taster S1 einerseits und den Taster S2 andererseits mit der Kippstufe bzw. dem Multivibrator 1 verbinden. In die Leitungen 17 und 18 sind Schließerkontakte k2s und k1s der Relais K2 und K1 vorgesehen. Den Schließerkontakten k2s und k1s sind ebenfalls Dioden V9 und V12 vorgeschaltet, die wiederum hinsichtlich ihrer Durchlaßrichtung gegenläufig ausgerichtet sind, wobei ebenfalls die Dioden V9 und V10 einerseits und die Dioden V11 und V12 andererseits gegenläufig ausgerichtet sind.

Die Treiberstufe 2 ist über eine Leitung 21 an die Leitung 13 angeschlossen, wobei die Leitung 21 zwischen den Emittern der PNP-Transistoren Q1 und Q2 angeschlossen ist und eine Diode V1 aufweist, deren Durchlaßrichtung vom Taster S1 zu der Verbindungsleitung zwischen den Emittern der PNP-Transistoren Q1 und Q2 ausgerichtet ist. Zwischen der Treiberstufe 2 und der Leitung 14 ist eine Leitung 22 vorgesehen, die ebenfalls eine Diode V8 aufweist und die emitterseitig an die NPN-Transistoren Q3 und Q4 angeschlossen ist, wobei die Diode V8 ihre Durchlaßrichtung von den Emittern der NPN-Transistoren Q3 und Q4 zur Leitung 14 hat.

Die Kippstufe bzw. der Multivibrator 1 weist zwei NPN-Transistoren Q5 und Q6 auf, deren Basis jeweils zwischen einem Widerstand R5 bzw. R12 und jeweils einer Diode V15 bzw. V14 geschaltet ist. Der Kollektor des NPN-Transistors Q5 ist mit einem Widerstand R6 in Reihe geschaltet, wogegen der Kollektor des NPN-Transistors Q6 mit dem Widerstand R11 in Reihe geschaltet ist.

Der Widerstand R6 ist parallel zu zwei Widerständen R7 und R8 und der Widerstand R11 ist parallel zu zwei Widerständen R9 und R10 geschaltet. Zwischen die Widerstände R6 und R7 ist eine Diode V13 und zwischen die Widerstände R10 und R11 ist eine Diode V16 geschaltet, wobei die Durchflußrichtung der Diode V13 vom Widerstand R7 zum Widerstand R6 und die Durchflußrichtung der Diode V16 vom Widerstand R10 zum Widerstand R11 verläuft.

Ferner sind zwischen die Widerstände R7 und R8 ein Kondensator C1 und zwischen die Widerstände R9 und R10 ein Kondensator C2 geschaltet, wobei die Widerstände R8 und R9 in Reihe mit den Dioden V14 und V 15 geschaltet sind, deren Durchflußrichtung in Richtung auf die Basen der NPN-Transistoren Q5 und Q6 verläuft.

Parallel zum Widerstand R11 ist ferner ein Kondensator C3 und ein Widerstand R13 geschaltet, wobei die positive Platte des Kondensators C3 seitens des Widerstandes R11 und die negative Platte des Kondensators C3 seitens des Widerstandes R13 angeordnet ist, welcher ausgangsseitig mit dem Emitter des NPN-Transistors Q6 und dem dazu parallel geschalteten Widerstand R12 verbunden ist.

Die Wirkungsweise der zuvor beschriebenen Sicherheitsschaltung ist im wesentlichen folgende:

Zunächst sei bemerkt, daß die Sicherheitsschaltung gemäß dem beschriebenen Ausführungsbeispiel mit Gleichstrom betrieben wird. Wenn die Taster S1 und S2 der Betätigungsvorrichtung, beispielsweise einer Zweihandbetätigung nicht gedrückt sind, so befindet sich die Sicherheitsschaltung in Ruhelage. Über die geschlossenen Kontakte des vereinfacht mit ESB (externe Startbedingung) bezeichneten Anschlusses mit an sich bekannten Rückführkreisen, nämlich dem Anschluß der Sicherheitsschaltung an den Rest der Maschinensteuerung, beispielsweise einer Gefahr bringenden metallverarbeitenden Maschine, ferner über den Öffnerkontakt k2ö des Relais K2, die Diode V11 und den Öffnerkontakt s2ö des Tasters S2 wird die Kippstufe bzw. der Multivibrator 1 mit der Spannung V- versorgt. Über den Öffnerkontakt k1ö des Relais K1, die Diode V10 und den Öffnerkontakt s1ö des Tasters S1 wird die Kippstufe bzw. der Multivibrator 1 auf Spannung V+ gelegt.

Die Kippstufe bzw. der Multivibrator 1 schwingt in diesem Zustand an und erzeugt zwei Rechtecksignale, nämlich Signal 1 und Signal 2, die komplementär und zueinander invers verlaufen und jeweils gleiche Zeitlängen andauern. In dieser Ruhelage nimmt der Kondensator C3 die Energie auf bzw. speichert diese, die er benötigt, um in einer Betätigungszeit der Taster S1 und S2 von maximal 500 ms die Kippstufe bzw. den Multivibrator 1 zu versorgen. Wenn die beiden Taster S1 und S2 nicht innerhalb dieser Betätigungszeit, also praktisch gleichzeitig, betätigt werden, ist der Kondensator C3 vorzeitig entladen, so daß die Kippstufe bzw. der Multivibrator 1 die Relais K1 und K2 nicht mehr versorgen würde, so daß der weitere Vorgang der Sicherheitsschaltung unterbrochen würde. Die Dioden V1 und V8 sperren in diesem Zustand, in dem die Taster S1 und S2 unbetätigt sind, den Stromfluß für die Treiberstufe 2, so daß die Relais K1 und K2 nicht erregt werden. Wenn in diesem Zustand ein Öffnerkontakt k1ö und k2ö der Relais K1 oder K2 nicht geschlossen sind, würde die Kippstufe bzw. der Multivibrator 1 nicht arbeiten. Da die Relais K1 und K2 zwangsführende Relais sind, wird ein mögliches Kontaktversagen hier entdeckt.

Bei Betätigung der Taster S1 und S2 innerhalb der Betätigungszeit von 500 ms wird die Treiberstufe 2 über die Schließer s1s und s2s mit Spannung V+ und V- versorgt. Die Dioden V1 und V8 sind jetzt in Flußrichtung gepolt. Die im Kondensator C3 gespeicherte Energie versorgt in diesem Zustand für die Länge der Betätigungszeit von maximal 500 ms die Kippstufe bzw. den Multivibrator 1.

Bei der Betätigung der Taster S1 und S2 innerhalb der Betätigungszeit von maximal 500 ms werden die Relais K1 und K2 aktiviert und versorgen die Kippstufe bzw. den Multivibrator 1 über die Dioden V9 und V12 mit Spannung. Hierbei steuern die Rechtecksignale Signal 1 und Signal 2 der Kippstufe bzw. des Multivibrators 1 die Treiberstufe 2 wie folgt durch:

In einem ersten Zustand ist das Signal 1 hoch (high) und das Signal 2 niedrig (low), wodurch die Transistoren Q1 und Q 4 leiten und das Relais K1 erregt wird, womit auch die Kontakte des Relais entsprechend umschalten.

In einem zweiten Zustand ist das Signal 1 niedrig (low) und das Signal 2 hoch (high), so daß die Transistoren Q2 und Q3 leiten und das Relais K2 erregt wird, womit dessen Kontakte entsprechend umschalten.

Sind die Relais K1 und 2 angezogen, so wird die Kippstufe bzw. der Multivibrator 1 über die Schließerkontakte k1s und k2s der Relais K1 und K2 versorgt.

Im vorstehend genannten ersten Zustand fließt der Strom von A1 über den Schließerkontakt s1s des Tasters S1, die Diode V1, den Transistor Q1, die Diode V4 durch das Relais K1 zum Transistor Q4 und von dem Transistor Q4 über die Diode V8 und den Schließerkontakt s2s des Tasters S2 nach A1. Hierbei wird das Relais K1 erregt.

In dem voranstehend beschriebenen zweiten Zustand fließt der Strom von A1 über den Schließerkontakt s1s des Tasters S1, die Diode V1 zum Transistor Q2 und vom Transistor Q2 über die Diode V7 durch das Relais K2 und von dort über den Transistor Q3 zur Diode V8, um über den Schließerkontakt s2s des Tasters S2 nach A2 zu fließen. In diesem Zustand wird das Relais K2 erregt.

Die Frequenz der Kippstufe bzw. des Multivibrators 1 beträgt vorzugsweise 1000 Hz und wechselt somit den Zustand der Signale Signal 1 und Signal 2 alle 0,5 ms. Bedingt durch die Abfallverzugszeit der Relais K1 und K2 und der in der jeweiligen Relaisspule gespeicherten magnetischen Energie, die in den Ansteuerpausen über die Freilaufdiode V5 für Relais K1 und die Freilaufdiode V6 für Relais K2 den Stromfluß der Gegeninduktion durch die Relaisspulen aufrechterhält, bleiben beide Relais K1 und K2 angezogen. Dieser Zustand bleibt solange erhalten, bis die Taster S1 und S2 losgelassen werden. Nun sperren die Dioden V1 und V8 den Stromfluß und die Treiberstufe 2 wird nicht mehr mit Spannung versorgt. Die Relais K1 und K2 fallen ab, wodurch sich die Ruhelage des Gerätes bzw. der Sicherheitsschaltung einstellt.

Aufgrund verschiedener Toleranzen wird bei der Kippstufe bzw. bei dem Multivibrator 1 im Einschaltmoment entweder der Transistor Q5 oder der Transistor Q6 durchgesteuert. Für den Fall, daß der Transistor Q6 durchgesteuert ist, liegt der Kollektor des Transistors Q6 entsprechend dem Signal 2 auf low-Potential. Damit fließt ein Ladestrom, der durch den Widerstand R9 definiert ist, über den Kondensator C2. Die Basis des Transistors Q5 liegt hierbei zunächst auf low-Potential, wobei der Transistor Q5 gesperrt ist. Hierdurch steht am Kollektor des Transistors Q5 entsprechend

EP 0 767 478 B1

dem Signal 1 high-Potential an. Durch den Ladestrom, der über den Kondensator C2 fließt, steigt das Potential an der Basis des Transistors Q5 an, bis der Transistor Q5 durchsteuert. Dabei fällt das Signal 1 auf low-Potential und gleichzeitig fließt ein Ladestrom, der durch den Widerstand R8 definiert ist, über den Kondensator C1.

Die Basis des Transistors Q6 fällt dabei zurück auf low-Potential und sperrt den Transistor Q6, wodurch das Signal 2 auf high-Potential geht.

Dieser Prozeß läuft zyklisch ab. Sofern

$$R9 \times C2 = R8 \times C1$$

ist, entsteht ein Signalverlauf des Signals 1 gegenüber dem Signal 2, bei dem die high- und low-Phasen gleichlang andauern und zueinander invers ausgerichtet sind.

Die in der voranstehend beschriebenen Sicherheitsschaltung vorhandenen Dioden V13, V14, V15 und V16 dienen der Beschleunigung der Umschaltzeiten der Signale 1 und 2. Die Arbeitspunkte werden durch die Widerstände R5 und R12 eingestellt.

Aus der nachfolgenden Fehlerbetrachtung ergeben sich weitere Merkmale und Wirkungsweisen der erfindungsgemäßen Sicherheitsschaltung. Die Fehlerbetrachtung zeigt vor allem, daß alle nur denkbaren Fehler von den Tastern S1, S2 bis hin zum Eingang der ESB (externen Starbedingung) der externen Maschinensteuerung erkannt werden und in jedem Falle ein Durchschalten verhindert wird.

Die zu schützende gefährliche Bewegung wird über zwei nicht gezeichnete Ausgänge der Sicherheitseinrichtung redundant ausgelöst. Dabei können die redundanten Ausgänge sowohl als Schließerkreise als auch als Öffnerkreise ausgebildet sein.

| Fehlerbetrachtung | | | | |
|---|---|---|---|---|
| 1.) | S1 | Schließer-Leiterbruch | | Multivibrator läuft in Ruhelage. Kein Plus hei Betätigung von S1. |
| 2.) | S1 | Schließer-Überbrückt | | Kurzschluß. |
| 3.) | S1 | Öffner-Leiterbruch | | Multivibrator läuft in Ruhelage nicht an. (Kein Minus). |
| 4.) | S1 | Öffner -Überbrückt | | Kurzschluß bei Betätigung. |
| 5.) | S2 | Schließer -Leiterbruch | | Multivibrator läuft in Ruhelage. Kein Minus bei Betätigung von S2. |
| 6.) | S2 | Schließer-Überbrückt | | Kurzschluß. |
| 7.) | S2 | Öffner-Leiterbruch | | Multivibrator läuft in Ruhelage nicht an. (Kein Plus). |
| 8.) | S2 | Öffner-Überbrückt | | Kurzschluß bei Betätigung |
| 9.) | Q1 | E | -Bruch | Q1 sperrt , keine Basisansteuerung für Q3, K2 kommt nicht, Ausgang Kanal 1 und Kanal 2 kommt nicht. |
| 10.) | Q1 | E-C | -Brücke | Q3 und Q4 dauernd angesteuert, Kurzschluß über Q2 und Q5. K1 und K2 kommen nicht. Ausgang Kanal 1 und Kanal 2 kommt nicht. |
| 11.) | Q1 | B | -Bruch | Q1 sperrt. (siehe Fehler 9.) |
| 12.) | Q1 | E-B | -Brücke | Q1 sperrt. (siehe Fehler 9.) |
| 13.) | Q1 | C | -Bruch | Q1 sperrt. (siehe Fehler 9.) |
| 14.) | Q1 | B-C | -Brücke | Q1 Leitet, Kurzschluß über Q2 und Q3, K1 kommt nicht. Ausgang Kanal 1 und Kanal 2 kommt nicht. |
| 15.) | Q2 | E | -Bruch | Q2 sperrt, K1 kommt nicht. Ausgang Kanal 1 und Kanal 2 Kommt nicht. |
| 16.) | Q2 | E - C | -Brücke | Q2 Emitter-Collector gebrückt, Kurzschluß über Q3. K1 kommt nicht. Ausgang Kanal 1 und Kanal 2 kommt nicht. |
| 17.) | Q2 | B | -Bruch | Q2 sperrt. ( siehe Fehler 15.) |
| 18.) | Q2 | E - B | -Brücke | Q2 sperrt. (siehe Fehler 15.) |
| 19.) | Q2 | C | -Bruch | Q2 sperrt. (siehe Fehler 15.) |
| 20.) | Q2 | B-C | -Brücke | Q2 Leitet, Kurzschluß über Q2 und Q3. K1 kommt nicht. Ausgang Kanal 1 und Kanal 2 kommt nicht. |
| 21.) | Q3 | E | -Bruch | Q3 sperrt, K2 kommt nicht. Ausgang Kanal 1 und Kanal 2 kommt nicht. |

(fortgesetzt)

| Fehlerbetrachtung | | | | |
|---|---|---|---|---|
| 22.) | Q3 | E-C | -Brücke | Q3 Emitter- Collector gebrückt, Kurzschluß über Q2. K1 kommt nicht. Ausgang Kanal 1 und Kanal 2 kommt nicht. |
| 23.) | Q3 | B | -Bruch | Q3 sperrt. (siehe Fehler 21.) |
| 24.) | Q3 | E-B | -Brücke | Q3 sperrt. (siehe Fehler 21.) |
| 25.) | Q3 | C | -Bruch | Q3 sperrt. (siehe Fehler 21.) |
| 26.) | Q3 | B - C | -Brücke | Q3 Leitet, Kurzschluß über Q2 und Q3. K1 kommt nicht. Ausgang Kanal 1 und Kanal 2 kommt nicht. |
| 27.) | Q4 | E | -Bruch | Q4 sperrt, K2 kommt nicht. Ausgang Kanal 1 und Kanal 2 kommt nicht. |
| 28.) | Q4 | E - C | -Brücke | Q4 Emitter- Collector gebrückt, Kurzschluß über Q5. K2 kommt nicht. Ausgang Kanal 1 und Kanal 2 kommt nicht. |
| 29.) | Q4 | B | -Bruch | Q4 sperrt. ( siehe Fehler 27.) |
| 30.) | Q4 | E-B | -Brücke | Q4 sperrt. (siehe Fehler 27.) |
| 31.) | Q4 | C | -Bruch | Q4 sperrt. ( siehe Fehler 27.) |
| 32.) | Q4 | B-C | -Brücke | Q4 Leitet, Kurzschluß über Q4 und Q5. K2 kommt nicht. Ausgang Kanal 1 und Kanal 2 kommt nicht. |
| 33.) | Q5 | E | -Bruch | Q5 sperrt, K1 kommt nicht. Ausgang Kanal 1 und Kanal 2 kommt nicht. |
| 34.) | Q5 | E - C | -Brücke | Q5 Emitter- Collector gebrückt, Kurzschluß über Q4. K2 kommt nicht. Ausgang Kanal 1 und Kanal 2 kommt nicht. |
| 35.) | Q5 | B | -Bruch | Q5 sperrt. (siehe Fehler 33.) |
| 36.) | Q5 | E-B | -Brücke | Q5 sperrt. (siehe Fehler 33.) |
| 37.) | Q5 | C | -Bruch | Q5 sperrt. (siehe Fehler 33.) |
| 38.) | Q5 | B - C | -Brücke | Q5 Leitet, Kurzschluß über Q4 und Q5. K2 kommt nicht. Ausgang Kanal 1 und Kanal 2 kommt nicht. |
| 39.) | Q6 | E | -Bruche | Q6 sperrt , keine Basisansteuerung für Q5. K2 kommt nicht. Ausgang Kanal 1 und Kanal 2 kommt nicht. |
| 40.) | Q6 | E - C | -Brücke | Q2 und Q5 dauernd angesteuert, Kurzschluß über Q3 und Q4. K2 kommt nicht. Ausgang Kanal 1 und Kanal 2 kommt nicht. |
| 41.) | Q6 | B | -bruch | Q6 sperrt. (siehe Fehler 39.) |
| 42.) | Q6 | E-B | -Brücke | Q6 sperrt. (siehe Fehler 39.) |
| 43.) | Q6 | C | -Bruch | Q6 sperrt. (siehe Fehler 39.) |
| 44.) | Q6 | B - C | -Brücke | Q6 Leitet, Kurzschluß über Q4 und Q5, K2 kommt nicht. Ausgang Kanal 1 und Kanal 2 kommt nicht. |
| 45.) | V9 | Hochohmig | | V9 sperrt , K1 kommt nicht. Ausgang Kanal 1 und Kanal 2 kommt nicht. |
| 46.) | V9 | Niederohmig | | Kurzschluß über Q4 - V10 - V9 - Q3 . K2 Kommt nicht. Ausgang Kanal 1 und Kanal 2 kommt nicht. |
| 47.) | V10 | Hochohmig | | V10 sperrt, K1 kommt nicht. Ausgang Kanal 1 und Kanal 2 kommt nicht. |
| 48.) | V10 | Niederohmig | | Kurzschluß Ober Q2 - V9 - V10 - Q5 . K1 Kommt nicht. Ausgang Kanal 1 und Kanal 2 kommt nicht. |
| 49.) | V11 | Hochohmig | | V11 sperrt , K2 kommt nicht. Ausgang Kanal 1 und Kanal 2 kommt nicht. |
| 50.) | V11 | Niederohmig | | Kurzschluß über Q4 - V12 - V11 - Q3 . K2 Kommt nicht. Ausgang Kanal 1 und Kanal 2 kommt nicht. |
| 51.) | V12 | Hochohmig | | V12 sperrt, K2 kommt nicht. Ausgang Kanal 1 und Kanal 2 kommt nicht. |
| 32.) | V12 | Niederohmig | | Kurzschluß Ober Q2 - V11 - V12 - Q5 . K1 Kommt nicht. Ausgang Kanal 1 und Kanal 2 kommt nicht. |

**Patentansprüche**

1. Sicherheitsschaltung mit einer Betätigungsvorrichtung für elektrische Einrichtungen, wobei die Betätigungsvorrichtung mittels zweier Taster bzw. Kontaktsätzen bedienbar ist, dadurch gekennzeichnet, daß die beiden Taster (S1, S2) je einen Öffnerkontakt (s1ö, s2ö) und einen Schließerkontakt (s1s, s2s) aufweisen und mit einer angeschlossenen Treiberstufe (2), vorzugsweise einer Transistortreiberstufe mit Transistoren (Q1, Q2, Q3, Q4) zusammenwirken, daß die Treiberstufe (2) zwei Relais (K1, K2) aufweist, daß über Kontakte (k1, k2) der Relais (K1, K2) eine astabile Kippstufe bzw. ein Multivibrator (1) mit einer Taktfrequenz von etwa 1000 Hz zur Erzeugung von zwei komplementären Rechtecksignalen (Signal 1, Signal 2) angeschlossen ist, so daß die Relais (K1, K2) dynamisch schaltbar sind.

2. Sicherheitsschaltung nach Anspruch 1, dadurch gekennzeichnet, daß ein Kondensator (C3) vorgesehen ist, welcher so bemessen ist, daß er in Ruhelage die Energie speichert, die benötigt wird, um in der Betätigungszeit beider Taster (S1, S2) von maximal 500 ms die Kippstufe bzw. den Multivibrator (1) mit Spannung zu versorgen.

3. Sicherheitsschaltung nach Anspruch 2, dadurch gekennzeichnet, daß bei Betätigung der beiden Taster (S1, S2) innerhalb einer Betätigungsszeit von maximal 500 ms die Treiberstufe (2) über die Schließerkontakte (s1s, s2s) der Taster (S1, S2) mit Spannung V+ und V- versorgt ist und die Relais (K1, K2) aktiviert werden.

4. Sicherheitsschaltung nach Anspruch 2 oder 3, dadurch gekennzeichnet, daß der Kondensator (C3) in die Kippstufe bzw. den Multivibrator (1) integriert ist.

5. Sicherheitsschaltung nach einem der Ansprüche 1 bis 4, dadurch gekennzeichnet, daß die astabile Kippstufe bzw. der Multivibrator (1) ein Tastverhältnis $T_{ein}$ zu $T_{aus}$ von 50% zu 50% hat.

6. Sicherheitsschaltung nach einem der Ansprüche 1 bis 5, dadurch gekennzeichnet, daß die astabile Kippstufe bzw. der Multivibrator (1) Rechtecksignale (Signal 1, Signal 2) mit einer Flankensteilheit von bis zu 10 μs, vorzugsweise kleiner als 1μs erzeugt.

7. Sicherheitsschaltung nach einem der Ansprüche 1 bis 6, dadurch gekennzeichnet, daß zwischen dem ersten Taster (S1) und der Treiberstufe (2) eine erste Diode (V1) und zwischen dem zweiten Taster (S2) und der Treiberstufe (2) eine zweite Diode (V8) angeordnet sind, wobei die Dioden (V1, V8) bei unbetätigten Tastern (S1, S2) den Stromfluß zur Treiberstufe (2) sperren.

8. Sicherheitsschaltung nach einem der Ansprüche 1 bis 7, dadurch gekennzeichnet, daß die Rechtecksignale (Signal 1, Signal 2) der Kippstufe bzw. des Multivibrators (1) die Treiberstufe (2) in der Art ansteuern, daß die Rechtecksignale (Signal 1, Signal 2) alternierend hoch oder niedrig sind, so daß entweder das erste Relais (K1) oder das zweite Relais (K2) erregt ist.

9. Sicherheitsschaltung nach einem der Ansprüche 1 bis 8, dadurch gekennzeichnet, daß die Kippstufe bzw. der Multivibrator (1) über Schließer (K1, K2) der Relais (K1, K2) versorgt sind, wenn die Relais (K1, K2) angezogen sind.

10. Sicherheitsschaltung nach einem der Ansprüche 1 bis 9, dadurch gekennzeichnet, daß die zwei komplementären Rechtecksignale (Signal 1, Signal 2) gleiche Längen andauern und zueinander invers sind.

**Claims**

1. A safety circuit with an actuation device for electrical installations, wherein said actuation device is operable by means of two key switches or contact sets, characterized in that the two key switches (S1, S2) each comprise one break contact (s1ö, s2ö) and one make contact (s1s, s2s) and cooperate with a driver stage (2), preferably a transistor driver stage with transistors (Q1, Q2, Q3, Q4), connected therewith, that the driver stage (2) comprises two relays (K1, K2), that via contacts (k1, k2) of the relays (K1, K2) an astable trigger circuit or multivibrator (1) having a clock frequency of approximately 1000 Hz is connected for producing two complementary square signals (signal 1, signal 2), so that the relays (K1, K2) are dynamically switchable.

2. Safety circuit according to claim 1, characterized in that a capacitor (C3) is provided which is so dimensioned as to store in its rest position the energy which is needed for supplying voltage to said trigger circuit or multivibrator (1) during the actuation time of 500 ms at maximum of the two key switches (S1, S2).

3. Safety circuit according to claim 2, characterized in that at the actuation of said two key switches (S1, S2) within an actuation time of 500 ms at maximum the driver stage (2) is supplied via the make contacts (s1s, s2s) of the key switches (S1, S2) with voltage V+ and V-, and the relays (K1, K2) are activated.

4. Safety circuit according to claim 2 or 3, characterized in that the capacitor (C3) is integrated in the trigger circuit or multivibrator (1).

5. Safety circuit according to one of the claims 1 to 4, characterized in that the astable trigger circuit or multivibrator (1) has a pulse duty factor $T_{on}$ to $T_{off}$ of 50% to 50%.

6. Safety circuit according to one of the claims 1 to 5, characterized in that the astable trigger circuit or multivibrator (1) generates square signals (signal 1, signal 2) having an edge steepness of up to 10 µs, preferably smaller than 1 µs.

7. Safety circuit according to one of the claims 1 to 6, characterized in that between the first key switch (S1) and the driver stage (2) a first diode (V1) and between the second key switch (S2) and the driver stage (2) a second diode (V8) are arranged, wherein said diodes (V1, V8), with said key switches (S1, S2) being in the non-actuated condition, suppress current flow to the driver stage (2).

8. Safety circuit according to one of the claims 1 to 7, characterized in that the square signals (signal 1, signal 2) of the trigger circuit or multivibrator (1) drive the driver stage (2) in such a manner that said square signals (signal 1, signal 2) are alternatingly high or low, so that either the first relay (K1) or the second relay (K2) is excited.

9. Safety circuit according to one of the claims 1 to 8, characterized in that the trigger circuit or multivibrator (1) is supplied via make contacts (K1, K2) of the relays (K1, K2) when the relays (K1, K2) are operated.

10. Safety circuit according to one of the claims 1 to 9, characterized in that both complementary square signals (signal 1, signal 2) continue the same lengths of time and are inverse to each other.

## Revendications

1. Circuit de sécurité avec un dispositif d'actionnement pour installations électriques, le dispositif d'actionnement pouvant être commandé au moyen de deux boutons-poussoirs ou groupes de contact, caractérisé en ce que les deux boutons-poussoirs (S1, S2) présentent chacun un contact de repos (s1ö, s2ö) et un contact de travail (s1s, s2s) et coopèrent avec un étage excitateur en circuit (2), de préférence un étage excitateur transistorisé avec des transistors (Q1, Q2, Q3, Q4), que l'étage excitateur (2) présente deux relais (K1, K2), qu'un étage à bascule astable ou un multivibrateur (1) avec une fréquence de cycles d'environ 1000 Hz est raccordé par des contacts (k1, k2) des relais (K1, K2) pour produire deux signaux rectangulaires complémentaires (signal 1, signal 2) si bien que les relais (K1, K2) peuvent être commutés dynamiquement.

2. Circuit de sécurité selon la revendication 1, caractérisé en ce qu'un condensateur (C3) est prévu qui est dimensionné de telle manière qu'il emmagasine, en position de repos, l'énergie qui est nécessaire pour alimenter en tension l'étage à bascule ou le multivibrateur (1) pendant le temps d'actionnement des deux boutons-poussoirs (S1, S2) de 500 ms maximum.

3. Circuit de sécurité selon la revendication 2, caractérisé en ce que, lors de l'actionnement des deux boutons-poussoirs (S1, S2) pendant un temps d'actionnement de 500 ms maximum, l'étage excitateur (2) est alimenté en tension V+ et V- par les contacts de travail (s1s, s2s) et les relais (K1, K2) sont activés.

4. Circuit de sécurité selon la revendication 2 ou 3, caractérisé en ce que le condensateur (C3) est intégré dans l'étage à bascule ou le multivibrateur (1).

5. Circuit de sécurité selon l'une des revendications 1 à 4, caractérisé en ce que l'étage à bascule astable ou le multivibrateur (1) a un rapport de cycle $T_{ein}$ à $T_{aus}$ de 50% à 50%.

6. Circuit de sécurité selon l'une des revendications 1 à 5, caractérisé en ce que l'étage à bascule astable ou le multivibrateur (1) produit des signaux rectangulaires (signal 1, signal 2) avec une pente de signal allant jusqu'à 10 μs, de préférence inférieure à 1 μs.

7. Circuit de sécurité selon l'une des revendications 1 à 6, caractérisé en ce qu'une première diode (V1) est placée entre le premier bouton-poussoir (S1) et l'étage excitateur (2) et une seconde diode (V8) est placée entre le second bouton-poussoir (S2) et l'étage excitateur (2), les diodes (V1, V8) bloquant la conduction de courant vers l'étage excitateur (2), lorsque les boutons-poussoirs (S1 , S2) ne sont pas actionnés.

8. Circuit de sécurité selon l'une des revendications 1 à 7, caractérisé en ce que les signaux rectangulaires (signal 1, signal 2) de l'étage à bascule ou du multivibrateur (1) excitent l'étage excitateur (2) de telle manière que les signaux rectangulaires (signal 1, signal 2) sont élevés ou bas en alternance si bien que soit le premier relais (K1), soit le second relais (K2) est excité.

9. Circuit de sécurité selon l'une des revendications 1 à 8, caractérisé en ce que l'étage à bascule ou le multivibrateur (1) sont alimentés par des contacts de travail (K1, K2) des relais (K1, K2), lorsque les relais (K1, K2) sont excités.

10. Circuit de sécurité selon l'une des revendications 1 à 9, caractérisé en ce que les deux signaux rectangulaires complémentaires (signal 1, signal 2) durent les mêmes durées et sont inverses l'un par rapport à l'autre.

A1 -> V+

S1   s1s

s1ö   13

V9   k2s   17

V1   21   V10   k1ö

1

Q1   PNP   PNP   Q2   2

R1   11   K1   R2

Z1   V4   Z2

8   7   V5   3

Signal 1   4

9

Signal 2

Z3   V6   12   Z4

R3   K2   V7   R4   6

Q3   NPN   NPN   Q4

V8   22   V11   k2ö   ESB

s2ö   s2s   14   V12   k1s   18

S2

A2 -> V−

R6   R7   R8   R9   R10   R11

V13   C1   V14   V15   C2   V16

5   10

C3

Q5   NPN   Q6   NPN   R13

R5   R12